# EUROPEAN PATENT APPLICATION

(11) **EP 3 919 151 A1**
(43) Date of publication of application: **08.12.2021**
(21) Application number: 21187654.5
(22) Date of filing: 18.02.2019
(51) Int. Cl.: B01D 39/08, B01D 29/11, D04B 1/18, D04B 1/22, B01D 29/27, D04B 1/10, D04B 1/16

(54) **BAG-SHAPED FILTER**

(30) Priority: 23.02.2018 JP 2018031267; 22.06.2018 JP 2018119141
(62) Divisional of application: 19757960.0
(71) Applicant: Nakano Industry, Inc., Kaizuka-shi, Osaka 597-0105 (JP)
(72) Inventor: NAKANO, Yoshinori, Osaka, 597-0105 (JP)
(74) Representative: Isarpatent

(57) **Abstract**

The present invention provides a bag-shaped filter in which the durability is higher than that of a bag-shaped filter of the related art without an increase in costs such that the replacement frequency can be lowered.

Further, the present invention provides a bag-shaped filter in which smaller solids can be captured compared to a bag-shaped filter of the related art such that high filtration performance and durability can be achieved simultaneously.

A bag-shaped filter used to filter waste liquid including solid components, wherein
the filter is a bag-shaped circular knitted fabric a part or the whole of which is obtained using a fiber material at least a part of which is an elastic yarn, and
a portion formed by at least doubly knitting a knitted fabric is provided in a bag-shaped bottom portion.

## Description

### Technical Field

The present invention relates to a bag-shaped filter and its use.

### Background Art

In the related art, an industrial filtration apparatus is known that separates solids included in liquid to be filtered using a bag-shaped filter. The filtration apparatus is used to separate solids having a predetermined size or larger including processed powder such as chips or abrasive powder, the processed powder being included in liquid to be filtered that is liquid such as a coolant, cutting oil, grinding fluid, or cleaning fluid being circulated and used for the cooling, lubricating, cleaning, or the like of a portion to be processed in a machine tool (for example, refer to PTL 1).

The present inventors developed a bag-shaped filter in which a covered elastic yarn is used (for example, refer to PTL 2). The bag-shaped filter in which a covered elastic yarn is used has an advantageous effect in that the lifetime (usable time) is long which is a period up to the time when clogging occurs. That is, since clogging is not likely to occur, there are advantageous effects in that the replacement frequency of the filter is low and the costs are low.

In this bag-shaped filter, it is more preferable that the durability is further improved such that the replacement frequency can be lowered without increasing the costs. In particular, in the bag-shaped filter, the deterioration rate largely varies depending on portions. However, due to the specific use characteristics of the filter, even in a case where deterioration does not occur substantially in all the portions, when deterioration occurs in a specific portion to which a load is likely to be applied, the filter cannot be used any longer, and it is necessary to replace the filter.

As a method of improving the strength, a method of increasing the thickness of a yarn to be used can be considered. However, for example, due to a restriction in a knitting machine to be used, it is difficult to solve the problem by increasing the thickness of a yarn.

In addition, in the bag-shaped filter, it is more preferable that pores between meshes are further reduced such that smaller solids can be captured. In particular, the size of solids to be captured by the filter varies depending on the intended purposes. Therefore, a filter that can capture smaller particles (for example, having an average particle diameter of 1 to 20 µm) is also required.

As a method of improving the capture capacity, a method of increasing the thickness of a yarn to be used as described above can be considered. However, for example, due to a restriction in the form of a hook or a gauge in a knitting machine to be used, when the thickness of a yarn increases, it is difficult to knit the yarn. Therefore, it is difficult to solve the above-described problem with this method. Accordingly, it is difficult to solve the above-described problem only by adjusting the thickness of a yarn to be used or a knit construction.

In addition, in the field of fibers, various heat-fusible yarns are known and are used for various purposes. For example, a heat-fusible polyurethane elastic fiber disclosed in PTL 3 or the like is known. However, a bag-shaped filter in which the heat-fusible yarn is used has not yet to be examined.

### Citation List

### Patent Literature

PTL 1: Japanese Unexamined Patent Publication JP-A 2003-154213
PTL 2: Japanese Unexamined Patent Publication JP-A 2013-078762
PTL 3: Japanese Unexamined Patent Publication JP-A 2006-307409

### Summary of Invention

### Technical Problem

The present invention has been made in consideration of the above-described circumstances, and an object thereof is to provide a bag-shaped filter in which the durability is higher than that of a bag-shaped filter of the related art without an increase in costs such that the replacement frequency can be lowered.

Further, another object of the present invention is to provide a bag-shaped filter in which smaller solids can be captured compared to a bag-shaped filter of the related art such that high filtration performance and durability can be achieved simultaneously.

### Solution to Problems

According to the present invention, there is provided a bag-shaped filter used to filter waste liquid including solid components, in which
the filter is a bag-shaped circular knitted fabric a part or the whole of which is obtained using a fiber material at least a part of which is an elastic yarn, and
a portion formed by at least doubly knitting a knitted fabric is provided in a bag-shaped bottom portion.

In the bag-shaped filter, it is preferable that at least a part of the filter is made of a covered elastic yarn.

It is preferable that a width of the portion formed by at least doubly knitting a knitted fabric is within a range of 20 to 100% of a width of the bag shape.

According to the present invention, there is provided a bag-shaped filter used to filter waste liquid including solid components, in which
the filter is a bag-shaped circular knitted fabric a part or the whole of which is obtained using a fiber material at least a part of which is an elastic yarn, and
a part of the used fiber material is made of a heat-fusible yarn.

It is preferable that the elastic yarn is a heat-fusible elastic yarn.

In the bag-shaped filter, it is preferable that at least a part of the filter is made of a heat-fusible elastic covered yarn.

In the bag-shaped filter, it is preferable that at least a part of the filter is made of a paralleled yarn of a heat-fusible elastic yarn and a false twist yarn.

It is preferable that the bag-shaped filter is a knitted fabric obtained by interknitting a heat-fusible elastic yarn and another fiber.

It is preferable that the bag-shaped filter is obtained by forming a bag shape through a knitting process and subsequently performing a heat treatment on the bag shape to fuse a heat-fusible yarn.

### Advantageous Effects of Invention

The first bag-shaped filter according to the present invention has excellent durability. Therefore, when the filter is used in a filtration apparatus, the replacement frequency can be lowered, and thus the costs can be reduced.

Further, the second bag-shaped filter according to the present invention has excellent filtration performance such that solids having a smaller particle diameter can be filtered. As a result, the filtration performance can be improved.

### Brief Description of Drawings

Fig. 1 is a schematic view illustrating an example of a bag-shaped filter according to the present invention.
Fig. 2 is a schematic view illustrating an example of the bag-shaped filter according to the present invention.
Fig. 3 is a schematic view illustrating an example of the bag-shaped filter according to the present invention.
Fig. 4 is a schematic view illustrating an example of the bag-shaped filter according to the present invention.
Fig. 5 is a schematic view illustrating an example of a method of manufacturing the bag-shaped filter according to the present invention.

Hereinafter, the present invention will be described in detail.

A first bag-shaped filter according to the present invention is characterized in that a portion formed by at least doubly knitting a knitted fabric is provided in a bag-shaped bottom portion.

That is, since a bag-shaped filter is set in a device in a vertical direction, most of waste liquid including solids falls on a bottom portion of the bag-shaped filter. Accordingly, during falling, a load is mainly applied to the filter bottom. Filtered solids are also likely to accumulate in the bottom. Therefore, a load concentrates on the bottom of the bag-shaped filter, and thus deterioration is likely to occur in the bottom. That is, although substantially no deterioration occurs in a body, deterioration occurs only in the bottom, which causes a decrease in the lifetime of the bag-shaped filter. In the present invention, the portion formed by doubly knitting a knitted fabric is provided in the bottom. As a result, the strength of the bottom is improved, and the above-described problem is solved.

In the present invention, the reason why a bag-shaped knitted fabric that is obtained using a fiber material is used is as follows, at least a part of the fiber material being made of an elastic yarn. Since the knitted fabric made of an elastic yarn has excellent elasticity, the ability to capture solids is extremely high, meshes are deformed by expansion and contraction of the yarn even after capturing a large amount of solids such that liquid can easily pass through the filter, and a problem of a decrease in filtration performance caused by clogging of meshes is not likely to occur.

The bag-shaped circular knitted fabric that is used in the present invention and a part or the whole of which is obtained using a fiber material at least a part of which is made of an elastic yarn is not particularly limited. For example, a knitted fabric (A-1) that is obtained using a composite fiber made of a combination of a spandex elastic yarn and another fiber, a knitted fabric (A-2) that is obtained using a conjugated fiber including an elastic body as a constituent unit, or a knitted fabric (A-3) that is obtained by interknitting a spandex yarn and another fiber can be used.

Hereinafter, these knitted fabrics will be described in more detail.

### (Knitted Fabric (A-1) obtained using Composite Fiber made of Combination of Spandex Elastic Yarn and Another Fiber)

Here, the composite fiber is a knitted fabric that is obtained using a composite yarn at least a part of which is made of a spandex elastic yarn and in which another fiber is used in combination. Here, the other fiber that is used in combination is not particularly limited. For example, it is preferable to use a polyamide fiber, silk, a polyester fiber, a cotton yarn, or a polyolefin fiber (for example, polypropylene fiber or polyethylene fiber). In particular, it is more preferable to use a polyester fiber or a polyamide fiber, and it is most preferable to use a polyester fiber. Examples of the polyester fiber described herein include a fiber made of polyethylene terephthalate and a fiber made of polybutylene terephthalate.

The spandex elastic yarn is not particularly limited, and it is most preferable to use a polyurethane elastic yarn from the viewpoints of durability, strength, cost, and the like.

As described below in detail, it is preferable that the bag-shaped filter according to the present invention is manufactured by manufacturing a cylindrical circular knitted fabric and sealing a bottom thereof. In the manufacturing method, it is necessary to obtain the strength of the sealed portion of the bottom. In particular, since the sealed portion forms a part of the bottom, a load is likely to be applied to the sealed portion during use as a filter, and ripping or fraying occurs from the sealed portion.

A method of forming a composite yarn is not particularly limited, and a well-known yarn such as a covered yarn or a paralleled yarn of an elastic yarn and a false twist yarn can be used. In particular, from the viewpoints of strength, workability, and the like, it is preferable to use a covered yarn obtained by winding another fiber around an elastic yarn.

The spandex elastic yarn constituting the covered elastic yarn is not particularly limited. For example, a 5 to 510-denier yarn can be used. The lower limit of the density is more preferably 10 denier, and the upper limit of the density is more preferably 280 denier.

The covered yarn may be either a single covered yarn or a double covered yarn.

Specific examples of the covered yarn include a single covered yarn (for example, SCY22dWN70/48, 50/144, 75/144, or 75/72 denier/filament) obtained by covering an elastic yarn with a high multifilament type (a yarn having one filament smaller than 1.2 decitex) having a large number of filaments of a synthetic fiber such as a polyester. In addition, the covered yarn may be a double covered yarn (DCY) obtained by covering an elastic fiber with two synthetic fiber yarns. As the spandex fiber, a polyurethane elastic fiber that is generally widely used is preferably used, but the spandex fiber is not limited thereto. For example, a polyether ester elastic fiber may also be used. In addition, by covering an elastic fiber yarn with a synthetic fiber yarn, processed powder can prevent mesh breakage and damage from occurring within a short period of time.

### (Knitted Fabric (A-2) obtained using Conjugated Fiber including Elastic Body as Constituent Unit)

As the conjugated fiber partially including an elastic body as a constituent unit, a commercially available product is present and can be suitably used. Examples of the conjugated fiber include a conjugated fiber of polyamide and polyurethane and a conjugated fiber of polyester and polyurethane. The conjugate type of the conjugated fiber is not particularly limited. For example, a side-by-side type or a core-sheath type can be used. As the conjugated fiber, a commercially available product such as SIDERIA (trade name) manufactured by KB SEIREN Ltd. can be used.

### (Knitted Fabric (A-3) obtained by interknitting Spandex Yarn and Another Fiber)

Instead of being used for the composite yarn or the conjugated yarn, the spandex yarn itself may be used as a single yarn and may be interknitted with another fiber. An interknitting method is not particularly limited, and any well-known knit construction can be used.

### (Regarding Combination with another Fiber Material)

In each of the knitted fabric such as (A-1) to (A-3), a combination of two or more kinds selected from the composite fiber made of a combination of a spandex elastic yarn and another fiber, the conjugated fiber including an elastic body as a constituent unit, and the spandex yarn may be used, or another fiber may be partially used in combination. Here, the other fiber is not particularly limited. For example, a polyamide fiber, silk, a polyester fiber, a cotton yarn, or a polyolefin fiber (for example, polypropylene fiber or polyethylene fiber) can be used.

A second bag-shaped filter according to the present invention is made of a bag-shaped circular knitted fabric a part or the whole of which is obtained using a fiber material, at least a part of the fiber material being made of a heat-fusible yarn, and at least a part of a fiber constituting the filter is made of a heat-fusible yarn.

In the bag-shaped filter according to the present invention, at least a part of the fiber material is made of the heat-fusible yarn such that a part of meshes are fused. As a result, displacement of meshes can be suppressed, penetration of small solids through meshes can be suppressed, and the filtration performance can be improved.

Regarding the heat-fusible yarn, a heat-fusible elastic yarn may be used as the elastic yarn, or a heat-fusible yarn may be used as a part or all of fibers that are used in combination with the elastic yarn. From the viewpoint that the above-described effects can be more favorably obtained, it is more preferable to use a heat-fusible elastic yarn.

The heat-fusible yarn that can be used in the present invention is not particularly limited, and examples thereof include a heat-fusible polyurethane elastic yarn, a heat-fusible polyester yarn, and a heat-fusible nylon yarn.

The heat-fusible polyurethane elastic yarn is not particularly limited, and the heat-fusion force during fusing at 80°C in a vacuum in a hot humid environment is preferably 0.15 N/dtex or higher. By using the heat-fusible polyurethane elastic yarn, a bag-shaped filter in which heat fusibility and heat resistance during thermal setting are excellent, yarn breakage or deterioration is not likely to occur, and durability is excellent can be obtained. In addition, in the heat-fusible polyurethane elastic yarn, the thickness of the yarn is preferably in a range of 10 to 310 tex. When the thickness of the yarn is smaller than the above-described range, the surface area of a fused portion decreases, and sufficient durability may not be obtained. In addition, when the thickness of the yarn is larger than the above-described range, the yarn may not be caught by a needle of a knitting machine. As the heat-fusible polyurethane elastic yarn, a commercially available product such as MOBILON K-L, MOBILON R, MOBILON RL, MOBILON RLL, (trade names, manufactured by Nisshinbo Textile Inc.), and LYCRA (trade name, manufactured by Invista) may be used.

In addition, in the present invention, an elastic yarn that is not heat-fusible may also be used in combination with a heat-fusible yarn. The non-heat-fusible elastic yarn that can be used is not particularly limited, and examples thereof include a polyurethane elastic yarn and a polyether ester elastic yarn.

Further, in the present invention, a heat-fusible yarn can also be used as the yarn that is used in combination with the elastic yarn. In this case, as the elastic yarn, a typical elastic yarn that is not heat-fusible yarn can also be used, and the elastic yarn can also be used in combination with a heat-fusible yarn.

The heat-fusible yarn that can be used in combination with the elastic yarn is not particularly limited, and examples of thereof include the heat-fusible polyester yarn and the heat-fusible polyamide yarn. Examples of the heat-fusible polyamide yarn include ELDER (trade name, manufactured by Toray Industries Inc.).

Further, in a case where a heat-fusible yarn is used as the yarn that is used in combination with the elastic yarn, pores in the bag-shaped filter are fixed, and the pores are not likely to expand even a physical force is applied. Therefore, in an initial stage of filtration, small solids can be removed, thereafter, however, during a long-term use, an effect of appropriately expanding the pores to suppress clogging may not be obtained, this effect being obtained by using a heat-fusible elastic yarn. From the above-described viewpoint, it is more preferable to use a heat-fusible elastic yarn as the elastic yarn.

In the second bag-shaped filter according to the present invention, it is preferable that, after forming a shape of the bag-shaped circular knitted fabric, a heat treatment is performed such that fusion by the heat-fusible yarn occurs. As a result, a given fusion process is performed between meshes such that the meshes are prevented from extremely expanding. Therefore, it is presumed that, when small solids are filtered, leakage from pores of the meshes is suppressed, and the effects of the present invention can be obtained.

Due to the above-described purpose, the heat-fusible yarn is used. Therefore, it is preferable that all the bag-shaped fabric is obtained using the fiber material a part or the whole of which is made of the elastic yarn and that the whole of the bag-shaped fabric is fused.

The bag-shaped circular knitted fabric that is used in the present invention and a part or the whole of which is obtained using a fiber material that is made of at least an elastic yarn is not particularly limited. For example, a knitted fabric (B-1) that is obtained using a composite fiber made of a combination of an elastic yarn and another fiber or a knitted fabric (B-2) that is obtained by interknitting an elastic yarn and another fiber can be used.

Hereinafter, these knitted fabrics will be described in more detail.

### (Knitted Fabric (B-1) obtained using Composite Fiber made of Combination of Elastic Yarn and Another Fiber)

Here, the composite fiber is a knitted fabric that is obtained using a composite yarn at least a part of which is made of an elastic yarn and in which another fiber is used in combination. In the composite yarn, a heat-fusible yarn is used as a part of the elastic yarn or the other fiber.

Here, the other fiber that is used in combination is not particularly limited. For example, it is preferable to use a polyamide fiber, silk, a polyester fiber, a cotton yarn, or a polyolefin fiber (for example, polypropylene fiber or polyethylene fiber). In particular, it is more preferable to use a polyester fiber or a polyamide fiber, and it is most preferable to use a polyester fiber. Examples of the polyester fiber described herein include a fiber made of polyethylene terephthalate and a fiber made of polybutylene terephthalate.

A method of forming a composite yarn is not particularly limited, and any well-known yarn such as a covered yarn including a heat-fusible elastic yarn as a core yarn or a paralleled yarn of a heat-fusible elastic yarn and a false twist yarn can be used. In particular, from the viewpoints of strength, workability, and the like, it is preferable to use a heat-fusible covered yarn obtained by winding another fiber around a heat-fusible elastic yarn.

A heat-fusible polyurethane elastic yarn constituting the heat-fusible covered yarn is not particularly limited. For example, a 5 to 510-denier yarn can be used. The lower limit of the density is more preferably 10 denier, and the upper limit of the density is more preferably 280 denier.

The heat-fusible covered yarn may be either a single covered yarn or a double covered yarn.

Specific examples of the heat-fusible covered yarn include a single covered yarn (for example, SCY22dWN70/48, 50/144, 75/144, or 75/72 denier/filament) obtained by covering a heat-fusible elastic yarn with a high multifilament type (a yarn having one filament smaller than 1.2 decitex) having a large number of filaments of a synthetic fiber such as a polyester. In addition, the heat-fusible covered yarn may be a double covered yarn (DCY) obtained by covering a heat-fusible elastic yarn with two synthetic fiber yarns.

Further, in the same fiber configuration as described above, a typical elastic yarn may be used as the elastic yarn, and a heat-fusible yarn may be used as the fiber used in combination.

Further, the whole of the composite yarn to be used may be "a composite yarn a part of which is made of a heat-fusible yarn" and may be used in combination with "a composite yarn that is not made of a heat-fusible yarn". When "the composite yarn a part of which is made of a heat-fusible yarn" is used, it is preferable that 50% or higher (in terms of the number of composite fibers) of the fibers to be used is composed of "the composite yarn a part of which a heat-fusible yarn".

### (Knitted Fabric (B-2) obtained by interknitting Elastic Yarn and Another Fiber)

Instead of being used for the composite yarn, the elastic yarn itself may be used as a single yarn and may be interknitted with another fiber. An interknitting method is not particularly limited, and any well-known knit construction can be used.

In the interknitted fabric, it is preferable to use a heat-fusible elastic yarn as a part or the whole of the elastic yarn.

As the heat-fusible elastic yarn, the examples described above regarding the knitted fabric (B-1) can be used.

From the viewpoint that small solids can be favorably removed for a long period of time, the knitted fabric (B-1) that is obtained using a composite fiber made of a combination of an elastic yarn and another fiber is more preferable.

### (Regarding Combination with Another Fiber Material)

In each of the knitted fabric such as (B-1) and (B-2), a combination of two or more kinds selected from the composite fiber made of a combination of a heat-fusible yarn and another fiber and the heat-fusible yarn may be used, or another fiber may be partially used in combination. Here, the other fiber is not particularly limited. For example, a polyamide fiber, silk, a polyester fiber, a cotton yarn, or a polyolefin fiber (for example, polypropylene fiber or polyethylene fiber) can be used.

### (Shape of Bag-Shaped Filter)

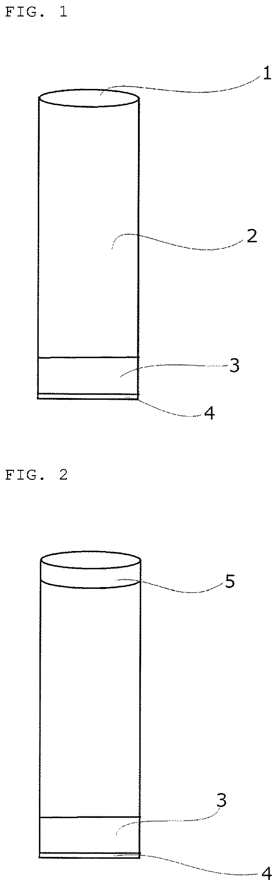

Fig. 1 illustrates an example of the first bag-shaped filter according to the present invention. As illustrated in Fig. 1, the filter according to the present invention has a bag shape including an opening portion 1. The bag shape is formed by sealing one end of the circular knitted fabric with a joint portion 4 of the bottom. In the vicinity of the bottom, a double knit portion 3 (or a triple or more knit portion) is formed.

In the bag-shaped filter having the above-described shape, as illustrated in Fig. 2, an end portion in the vicinity of the opening portion may be a double or more knit portion. The bag-shaped filter according to the present invention may be used in a state where the opening portion is fitted to a pipe. In this case, a load is likely to be applied to the opening portion, and the filter is likely to be broken. Therefore, the opening portion may be made of a double or more knitted fabric to reinforce the filter. Further, a triple or more or quadruple or more knit structure is preferable from the viewpoint that the reinforcement is further strengthened.

A method of forming the double or more knit structure is not particularly limited, and examples thereof include a method of double knitting using a K-type knitting machine and a method of forming a knit even after the formation of the double knit portion using a typical method and sewing these knits together to form a triple knit portion or a quadruple knit portion.

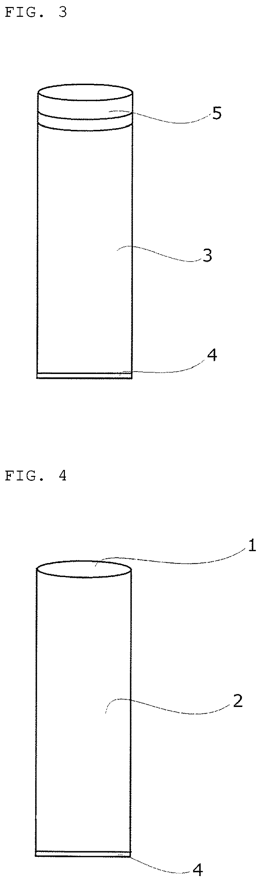

Further, as illustrated in Fig. 3, the double knit portion may be formed not only in the vicinity of the bottom but also in the entire body. When the double knit portion is formed in the vicinity of the bottom, the same effects as that of Fig. 1 can be obtained. Further, when the entire body has the double knit structure, the durability of the body can be improved. Therefore, in a filter for use requiring higher durability, it is preferable that the proportion of the double knit portion increases to further improve durability.

When the knit construction is double, the width thereof is not particularly limited and, for example, is preferably 20 to 100% of a width of the bag shape (that is, in the schematic view illustrated in Fig. 1, the width in the horizontal direction). It is preferable that the width is set as described above from the viewpoint that a portion of the bottom that is likely to be broken can be sufficiently reinforced.

In order to obtain the bag shape, it is necessary to perform joining of the knitted fabric in the joint portion 4 of the bottom. This joining can be performed using a method of performing sewing using a sewing machine.

Fig. 4 illustrates an example of the second bag-shaped filter according to the present invention. As illustrated in Fig. 4, the filter according to the present invention has a bag shape including the opening portion 1. The bag shape is formed by sealing one end of the circular knitted fabric with the joint portion 4 of the bottom. The bag-shaped filter according to the present invention is made of a bag-shaped circular knitted fabric a part or the whole of which is obtained using a fiber material, at least a part of the fiber material being made of a heat-fusible yarn and an elastic yarn. From the viewpoints of costs relating to a manufacturing process and durability, it is preferable that the whole of the filter is obtained using the same fiber material. In addition, particularly, the vicinity of the bottom to which a load is likely to be applied may be reinforced using a double or more knitted fabric. That is, as in the first bag-shaped filter illustrated in Fig. 1, the double knit portion 3 (or a triple or more knit portion) may be formed.

In the second bag-shaped filter, as in the first bag-shaped filter illustrated in Figs. 2 and 3, a double or more knit portion may be also formed in an end portion in the vicinity of the opening portion, or the double knit portion may be formed not only in the vicinity of the bottom but also in the entire body.

A method of forming the double or more knit structure is not particularly limited, and examples thereof include the same methods described above regarding the first bag-shaped filter.

When the knit construction is double, the width thereof is not particularly limited and, as in the first bag-shaped filter, is preferably 20 to 100% of a width of the bag shape (that is, in the schematic view illustrated in Fig. 1, the width in the horizontal direction).

In order to obtain the bag shape, it is necessary to perform joining of the knitted fabric in the joint portion 4 of the bottom. The joining can be performed by fusion using a heat-fusible yarn, sewing using a sewing machine, or a combination thereof.

### (Opening Portion of Bag-Shaped Filter)

The shape of the opening portion 1 of the bag-shaped filter is not particularly limited. For example, in the opening portion 1, a double or more knit portion may be formed as described above, or a string hole portion may be further formed. That is, in a general use method, the bag-shaped filter is used in a state where the opening portion is fitted to a pipe. Therefore, in order to fix the bag-shaped filter to the pipe, a method of fastening the filter to the pipe using a string or the like is most general.

The string hole portion is not particularly limited. For example, a method described in Japanese Unexamined Patent Publication JP-A 2013-231261 completed by the present inventors can be adopted, in which the number of knits during knitting is made to vary between a knitted ground and a string holding portion, and the knitted ground and the string holding portion are not connected to each other by stiches in a portion where the string hole portion is formed.

In the string hole portion formed using this method, both the construction forming the bag structure and the string hole portion are formed using the knit construction. Therefore, fraying or the like is not likely to occur, and the method is advantageous in that the manufacturing cost is low. Further, the width, length, and the like of the string hole portion can be freely adjusted depending on the purposes.

### (Manufacturing Method)

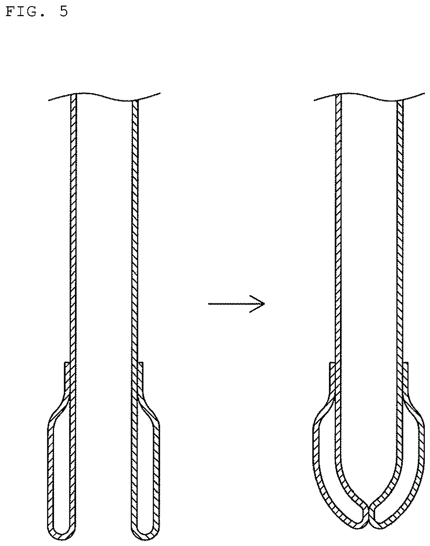

A method of manufacturing the above-described bag-shaped filter is not particularly limited. For example, the bag-shaped filter can be manufactured using, for example, the following method illustrated in the schematic view of Fig. 5.

The bag-shaped filter according to the present invention can be manufactured using a circular knitting machine. That is, the fabric is folded in the vicinity of an end portion while knitting the fabric in a cylindrical shape, and the end is joined to the body. As a result, a double knit structure can be obtained. This double knit structure can be obtained using a typical method used in double rib stitch knitting of a K-type stocking knitting machine.

Specific examples include a bag-shaped knitted fabric that is obtained using a high-gauge circular knitting machine (4 inches: 400 needles) as a sock knitting machine. The knitted fabric can be knitted using plain knitting or needle knitting alone or using a combination thereof.

The joining between the end and the body after folding may be performed by fusion using a heat-fusible yarn, by a knit construction, by sewing, or by a combination thereof.

End portions of the cylindrical fabric that is formed as described above are integrated such that the opening portion is sealed. As a result, the bag-shaped structure can be obtained. A process of integrating the end portions can be performed using a method such as fusion of a heat-fusible yarn or general sewing.

Regarding the first bag-shaped filter, end portions of a cylindrical fabric having a double or more folded structures are integrated such that an opening portion is sealed. As a result, the bottom of the bag shape can be made to have at least double knit structure.

In addition, in the cylindrical knitted fabric, the bottom may be formed at a knitting start portion or at a knitting end portion. In either case, the fabric can be manufactured using a circular knitting machine of the related art. Specifically, the double knit portion can be formed using a method of double knitting with a K-type knitting machine.

More specifically, it is preferable to prevent fraying by the following manufacturing method;
when a double knit portion is formed after initially forming a double knit portion, after the formation of the second double knit portion, a fusible yarn is knitted into eight scrap portions at the end of knitting through a four-opening knit, a two-opening knit, and a one-opening knit.

In the case of the second bag-shaped filter, a heating process is performed by heat-fusing a heat-fusible elastic yarn after the formation of the knit. The heating temperature is not particularly limited and is preferably 80°C to 125°C in a vacuum in a hot humid environment. In addition, this heating for fusion may be performed at the same time during heating in a calendering process, a dyeing process, or the like.

### (Filtration Apparatus]

The bag-shaped filter according to the present invention can be used for a filtration method including: introducing waste liquid from the opening portion; capturing solid components in the bag shape; and discharging the liquid to the outside. A filtration apparatus that performs this filtration is not particularly limited, and a well-known filtration apparatus described in, for example, Japanese Unexamined Patent Publication JP-A 2010-184170 can be favorably used.

### Examples

Hereinafter, the present invention will be described in more detail using Examples. The present invention is not limited to the following Examples.

### (Example 1)

A bag-shaped circular knitted fabric illustrated in Fig. 2 in which a double knit portion was formed in an opening portion and a tip portion was obtained by circular knitting with a diameter of 4 inches. In the obtained bag-shaped fabric, the width was 11 cm, and the length of the double knit structure in the tip portion was 4 cm.

During manufacturing, a covered yarn including a urethane elastic yarn as a core yarn was used. In addition, the joining of an end portion 4 was performed by sewing using a sewing machine.

### (Example 2)

A bag-shaped circular knitted fabric having a shape in which a double knit portion was also formed in a body as illustrated in FIG. 3 was obtained using the same method as that of Example 1.

### (Comparative Example 1)

A bag-shaped filter similar to that of Example 1 was manufactured except that a double knit portion was not formed in a tip portion.

### (Evaluation)

Using the filtration apparatus described in JP-A 2010-184170 including each of the bag-shaped filters according to Example 1 and Comparative Example 1, a coolant including cutting metal powder was filtered. As a result, the filter according to Example 1 was maintained in a usable state even after four weeks. However, the filter according to Comparative Example 1 deteriorated after four weeks, and the time for replacement was reached. It was found from the above-described result that the bag-shaped filter according to the present invention has excellent durability. In the filter according to Example 2, the same result as that of Example 1 was obtained.

### (Example 3)

### (Knitted fabric in which double knit portion was not formed, Covered yarn of Heat-Fusible Polyurethane Elastic Yarn)

A bag-shaped circular knitted fabric illustrated in Fig. 4 was knitted by circular knitting with a diameter of 4 inches, and presetting was performed at 105°C for 15 minutes in a vacuum in a hot humid environment. In the obtained bag-shaped fabric, the width was 11 cm.

During manufacturing, a single covered yarn including a heat-fusible polyurethane elastic yarn (MOBILON RLL, manufactured by Nisshinbo Textile Inc., 100 denier) as a core yarn and wooly nylon (100 denier/80 f) as a sheath yarn was used. In addition, the joining of an end portion was performed by sewing using a sewing machine.

### (Example 4)

### (Double Knit Portion was not formed, Covered yarn including Non-Elastic Heat-Fusible Yarn as Sheath Yarn)

A bag-shaped circular knitted fabric was knitted by circular knitting with a diameter of 4 inches, and was treated at 105°C for 15 minutes in a vacuum in a hot humid environment. In the obtained bag-shaped fabric, the width was 11 cm.

During manufacturing, a heat-fusible yarn (ELDER, manufactured by Toray Industries Inc.) was used for covering a typical polyurethane yarn (105d, manufactured by Asahi Kasei Corporation) as a sheath yarn. In addition, the joining of an end portion was performed by sewing using a sewing machine.

### (Example 5)

### (Double Knit Portion was not formed, Paralleled Yarn of Heat-Fusible Elastic Yarn and False Twist Yarn)

A bag-shaped circular knitted fabric was knitted by circular knitting with a diameter of 4 inches, and was treated at 105°C for 15 minutes in a vacuum in a hot humid environment. In the obtained bag-shaped fabric, the width was 9 cm. As the used fiber, a paralleled yarn of a covered yarn and wooly nylon (50 denier/40 f) was used, the covered yarn including a heat-fusible polyurethane elastic yarn (MOBILON RLL, manufactured by Nisshinbo Textile Inc., 100 denier) as a core yarn and a polyamide fiber of 12 denier/7 f as a sheath yarn. In addition, the joining of an end portion was performed by sewing using a sewing machine.

### (Example 6)

### (Knitted Fabric obtained by Interknitting Heat-Fusible Elastic Yarn and Another Fiber in which Double Knit Portion was not formed)

A single covered yarn including a heat-fusible polyurethane elastic yarn (MOBILON RLL, manufactured by Nisshinbo Textile Inc., 100 denier) as a core yarn and wooly nylon (100 denier/80 f) as a sheath yarn and wooly nylon (100 denier/80 f) were used. Among four openings of a knitting machine, the covered yarn was used for the first and third openings, and the wooly nylon was used for the second and four openings. A bag-shaped circular knitted fabric was knitted by circular knitting with a diameter of 4 inches and was treated at 105°C for 15 minutes in a vacuum in a hot humid environment. In the obtained bag-shaped fabric, the width was 11 cm. In addition, the joining of an end portion was performed by sewing using a sewing machine.

### (Example 7)

### (Double Knit Portion was formed in Bottom, Covered yarn of Heat-Fusible Polyurethane Elastic Yarn)

A bag-shaped fabric was obtained using the same method as that of Example 3, except that a bag-shaped circular knitted fabric illustrated in Fig. 2 in which a double knit portion was formed in an opening portion and a tip portion was obtained by circular knitting with a diameter of 4 inches. The fusion of a knitting end was performed by heat fusion, and the joining of the bottom of the bag-shaped portion was performed by sewing using a sewing machine.

### (Example 8)

A bag-shaped circular knitted fabric having a shape in which a double knit portion was also formed in a body as illustrated in FIG. 3 was obtained using the same method as that of Example 7.

### (Comparative Example 2)

### (Comparison to Example 3, Covered Yarn of Polyurethane Elastic Yarn that was not Heat-Fusible)

A bag-shaped circular knitted fabric was obtained using the same method as that of Example 3, except that a covered yarn including a polyurethane elastic yarn (105d, manufactured by Asahi Kasei Corporation) as a core yarn and a polyamide fiber (100 denier/80 f) as a sheath yarn was used. In addition, the joining of an end portion 4 was performed by sewing using a sewing machine.

### (Evaluation)

Using the filtration apparatus described in JP-A 2010-184170 including each of the bag-shaped filters according to Example 3 and Comparative Example 2, a coolant including cutting metal powder having an average particle diameter of 5 µm was filtered. As a result, the filter according to Example 3 was able to remove small metal powder. However, the filter according to Comparative Example 2 was not able to filter small metal powder so that small metal powder was present in the filtrate. It was clearly found from the above results that the bag-shaped filter according to the present invention can be favorably used for filtering waste liquid including smaller particles. In each of the filters according to Examples 4 to 8, the same result as that of Example 3 was obtained. In particular, the filters according to Examples 3, 7, and 8 exhibited excellent performance.

### Industrial Applicability

The bag-shaped filter according to the present invention can be favorably used as a filter in, for example, a filtration apparatus described in JP-A 2010-184170 for filtering processed powder such as chips or abrasive powder, the processed powder being included in liquid to be filtered that is liquid such as a coolant, cutting fluid, grinding fluid, or cleaning fluid being circulated and used for the cooling, lubricating, cleaning, or the like of a processed portion in a machine tool.

### Reference Signs List

1: opening portion
2: body
3: double knit portion
4: joint portion
5: double knit portion provided in opening portion

The present invention also comprises the following embodiments:
[Embodiment 1] A bag-shaped filter used to filter waste liquid including solid components, wherein
   the filter is a bag-shaped circular knitted fabric a part or the whole of which is obtained using a fiber material at least a part of which is an elastic yarn, and
   a portion formed by at least doubly knitting a knitted fabric is provided in a bag-shaped bottom portion.
[Embodiment 2] The bag-shaped filter according to embodiment 1, wherein
   at least a part of the filter is made of a covered elastic yarn.
[Embodiment 3] The bag-shaped filter according to embodiment 1 or 2, wherein
   a width of the portion formed by at least doubly knitting a knitted fabric is within a range of 20 to 100% of a width of the bag shape.
[Embodiment 4] A bag-shaped filter used to filter waste liquid including solid components, wherein
   the filter is a bag-shaped circular knitted fabric a part or the whole of which is obtained using a fiber material at least a part of which is an elastic yarn, and
   a portion formed by at least doubly knitting a knitted fabric is provided in a bag-shaped bottom portion.
   a part of the used fiber material is made of a heat-fusible yarn.
[Embodiment 5] The bag-shaped filter according to embodiment 4, wherein
   the elastic yarn is a heat-fusible elastic yarn.
[Embodiment 6] The bag-shaped filter according to embodiment 5, wherein
   at least a part of the filter is made of a heat-fusible elastic covered yarn.
[Embodiment 7] The bag-shaped filter according to embodiment 5, wherein
   at least a part of the filter is made of a paralleled yarn of a heat-fusible elastic yarn and a false twist yarn.
[Embodiment 8] The bag-shaped filter according to embodiment 5, wherein
   the filter is a knitted fabric obtained by interknitting a heat-fusible elastic yarn and another fiber.
[Embodiment 9] The bag-shaped filter according to any one of embodiments 4 to 8, wherein
   the filter is obtained by forming a bag shape through a knitting process and subsequently performing a heat treatment on the bag shape to fuse a heat-fusible yarn.

## Claims

1. Filtration method for filtering processed powder, the processed powder being included in liquid to be filtered that is liquid such as a coolant, cutting fluid, grinding fluid, or cleaning fluid being circulated and used for the cooling, lubricating, cleaning, or the like of a processed portion in a machine tool, comprising:
introducing liquid from the opening portion;
capturing solid components in a bag-meshesshaped filter; and
discharging the liquid to the outside, wherein
the bag-shaped filter is composed of a bag-shaped circular knitted fabric,
the whole bag-shaped circular knitted fabric comprises a fiber material comprising a heat-fused polyurethane elastic fiber,
a part of meshes of the knitted fabric is fused.

2. The filtration method according to claim 1, wherein the heat-fused polyurethane elastic fiber has a thickness in a range from 100 denier or more to 510 denier or less.

3. The filtration method according to claim 1, wherein the heat-fused polyurethane elastic fiber is a heat-fused polyurethane elastic covered fiber.

4. The filtration method according to claim 1, wherein at least a part of the filter comprises a paralleled yarn of the heat-fused polyurethane elastic fiber and a false-twisted yarn.

5. The filtration method according to claim 1, wherein the filter comprises a knitted fabric interknitted a heat-fused polyurethane elastic fiber with another fiber.

6. The filtration method according to claim 1, wherein the heat-fused polyurethane elastic fiber is fused by performing a heat treatment after forming a bag shape through a knitting process.
